# EUROPEAN PATENT APPLICATION

(11) **EP 4 818 743 A1**
(43) Date of publication of application: **07.10.2026**
(21) Application number: 24911094.1
(22) Date of filing: 24.12.2024
(51) Int. Cl.: G01S 7/48

(54) **RECEIVING MODULE, DETECTION APPARATUS, LIDAR, AND TERMINAL**

(30) Priority: 25.12.2023 CN 202311818014
(71) Applicant: Yinwang Intelligent Technologies Co., Ltd., Shenzhen, Guangdong 518110 (CN)
(72) Inventor: LIU, Jun, Shenzhen, Guangdong 518129 (CN); XIAO, Xisheng, Shenzhen, Guangdong 518129 (CN)
(74) Representative: Gill Jennings & Every LLP
(86) International application number: PCT/CN2024/141738
(87) International publication number: WO 2025/140169

(57) **Abstract**

A receiving module (1), a detection apparatus (100), a lidar (200), and a terminal are disclosed, and are used in the field of detection technologies. The receiving module (1) includes a first optical receiver (11 or 16), a second optical receiver (12 or 17), and a beam splitting apparatus (13). The beam splitting apparatus (13) is configured to split a beam from a detection region into a first beam and a second beam, the first beam is propagated to the first optical receiver (11 or 16), and the second beam is propagated to the second optical receiver (12 or 17). The two optical receivers (11 and 12 or 16 and 17) respectively receive the two beams obtained by splitting the beam from the detection region, so that two groups of detection data whose fields of view overlap can be obtained. This significantly improves detection accuracy and ensures detection efficiency, and does not significantly affect an overall volume of the detection apparatus nor increase heat dissipation pressure.

## Description

This application claims priority to Chinese Patent Application No. 202311818014.X, filed with the China National Intellectual Property Administration on December 25, 2023 and entitled "RECEIVING MODULE, DETECTION APPARATUS, LIDAR, AND TERMINAL", which is incorporated herein by reference in its entirety.

### TECHNICAL FIELD

This application relates to the field of detection technologies, and in particular, to a receiving module, a detection apparatus, a lidar, and a terminal.

### BACKGROUND

A lidar (Lidar) is a sensor that combines a laser technology and a photoelectric conversion technology. A basic operating principle of the lidar is as follows: A transmitting end transmits detection light to a detection region, and a receiving end receives return light (or referred to as an echo) returned by the detection region, and information related to a target in the detection region is obtained based on the return light. The information helps a device quickly identify and make a decision on a surrounding object, and the lidar is widely used in many fields such as intelligent vehicles, smart transportation, or surveying and mapping.

As the device becomes increasingly intelligent, people have an increasingly high requirement on detection accuracy of the lidar. As a result, a size of a detection chip at the receiving end of the lidar is increasingly large. It can be learned from the optical Lagrange-Helmholtz invariant that a larger imaging size of the receiving end indicates a larger volume of a receiving optical system. Consequently, an overall size of the lidar is greatly affected, and this is not conducive to overall miniaturization development of the lidar. In addition, a large-size detection chip also sharply increases thermal load, and reduces detection accuracy of the lidar to a large extent when the lidar operates for a long time or at a high temperature.

### SUMMARY

This application provides a receiving module, a detection apparatus, a lidar, and a terminal, to improve detection accuracy of the detection apparatus without significantly increasing an overall volume of the detection apparatus.

According to a first aspect, this application provides a receiving module, including a first array detector, a second array detector, and a beam splitting apparatus. The beam splitting apparatus is configured to split a beam from a detection region into a first beam and a second beam. The first beam forms a first light spot on the first array detector, the second beam forms a second light spot on the second array detector, and a relative position of the first light spot on the first array detector is different from a relative position of the second light spot on the second array detector.

In this application, the first beam and the second beam are obtained by splitting the same received beam. Therefore, the two beams correspond to the same detection region. That the two array detectors are configured to respectively receive the first beam and the second beam means that two groups of detection data with a consistent field of view are obtained through one time of receiving. The two groups of detection data can reflect detection results on the same detection region, so that the detection apparatus simultaneously performs detection on the detection region twice. This can significantly improve detection accuracy, and ensure detection efficiency. Further, the two groups of detection data are used for fusion to obtain a detection result on the detection region. Because there is no parallax between the two groups of detection data, computing complexity of a fusion process can be greatly reduced, and accuracy of the detection result obtained through fusion can be improved. In addition, because the array detector is located at an end of an optical path of the return beam, and the light spot of the beam is small, adding an array detector does not cause a receiving optical system to increase proportionally, and therefore does not significantly affect an overall volume of the detection apparatus.

The positions of the two light spots on the array detectors are set to be different, so that regions in which the first array detector and the second array detector obtain light spot energy are staggered, and the detection results obtained by the first array detector and the second array detector are interwoven. This effectively improves point cloud density and fusion effect, and improves the detection accuracy on the detection region.

In a possible implementation of the first aspect, in a first direction, there is a first offset between the relative position of the first light spot on the first array detector and the relative position of the second light spot on the second array detector.

The positions of the two light spots on the array detectors are offset, so that the regions in which the first array detector and the second array detector obtain the light spot energy are staggered, and the detection results obtained by the first array detector and the second array detector are interwoven. This effectively improves the point cloud density and fusion effect, and improves the detection accuracy on the detection region.

In still another possible implementation of the first aspect, a size of a photosensitive surface of the first array detector is the same as a size of a photosensitive surface of the second array detector. When the photosensitive surfaces are the same, it is easier to design an offset distance. In addition, when the photosensitive surfaces are the same, differences between fields of view, data amounts of the detection data, and the like of the first array detector and the second array detector are small (or even no difference), so that registration complexity can be reduced, and fusion is easy.

Optionally, a pixel size of the first array detector is the same as a pixel size of the second array detector. In this way, pixel-level registration is easily implemented, the registration complexity is reduced, the fusion is easy, and a resolution of the detection result obtained through fusion can be improved.

Further, quantities and arrangement manners of pixels of the first array detector and the second array detector are also the same.

In still another possible implementation of the first aspect, in the first direction, there is the first offset between a relative position of the first array detector and a center of the beam splitting apparatus and a relative position of the second array detector and the center of the beam splitting apparatus. In the foregoing implementation, the relative positions of the array detectors and the center of the beam splitting apparatus are offset, so that receiving positions of the light spots are different, the regions in which the first array detector and the second array detector obtain the light spot energy are staggered, and the detection results obtained by the first array detector and the second array detector are interwoven. This effectively improves the point cloud density and fusion effect, and improves the detection accuracy on the detection region.

In still another possible implementation of the first aspect, the first array detector and the second array detector each include M pixels, the M pixels are arranged in K rows, M is an integer and M≥2, and K is a positive number and M≥K≥2. The first offset is a length of (N+0.5) pixels, where N is an integer less than K, and N≥0.

When an offset between the two light spots exceeds a quantity of rows, if the receiving positions of the two light spots are staggered by a large distance, it may be difficult to have an overlapping region. In the foregoing implementation, offset is performed in the first direction, and the offset distance does not exceed the quantity of rows, so that the relative positions of the first light spot and the second light spot can overlap. This improves the point cloud density in the overlapping region.

In still another possible implementation of the first aspect, the first offset is a length of 0.5 pixels, and the relative position of the first light spot on the first array detector overlaps the relative position of the second light spot on the second array detector. In the foregoing implementation, the receiving positions of the two light spots are staggered by a width of half a pixel, so that parts that are in the first light spot and the second light spot and whose energy is obtained overlap largely. This greatly improves accuracy of the detection result.

In still another possible implementation of the first aspect, there is an overlapping region between the relative position of the first light spot on the first array detector and the relative position of the second light spot on the second array detector, and the overlapping region is a region of interest (region of interest, ROI). The receiving positions of the two light spots are staggered by a width greater than half a pixel, so that the parts that are in the first light spot and the second light spot and whose energy is obtained overlap. The overlapping region is a middle region of the light spots, which means performing repeated detection on a middle region of the field of view. In addition, a value of the first offset is designed, so that the overlapping region can be controlled, and the overlapping region of the light spots covers the ROI. This precisely improves the detection accuracy of the detection result within the ROI.

In still another possible implementation of the first aspect, one pixel includes detection cells in A rows and B columns, A is an integer and A≥1, and B is a positive number and B≥1. In some cases, an output of the detection cells in A rows and B columns is used as a sample of one pixel. In this way, a possible design of a pixel size is easily implemented, and design flexibility of the detection apparatus is improved.

In still another possible implementation of the first aspect, in a first direction, the first direction is a column direction of the first array detector and the second array detector. In the foregoing implementation, the relative positions of the first light spot and the second light spot may be offset in the column direction, so that the overlapping region is a middle region in the column direction, and it is easy to adjust and control a field of view in a vertical direction (namely, the column direction). In addition, the overlapping region is a middle region in the vertical direction, to improve adaptation to the ROI.

Optionally, the row and column may be replaced with each other.

In still another possible implementation of the first aspect, the first array detector includes a plurality of first pixels, the second array detector includes a plurality of second pixels, and a size of the first pixel is different from a size of the second pixel. Due to a design of different pixel sizes, energy obtaining regions of the first array detector and the second array detector may be interwoven, so that light falling into a pixel gap of one detector can be received by the other detector. This effectively improves the point cloud density.

In still another possible implementation of the first aspect, the first array detector and the second array detector have a same viewpoint relative to the detection region. In this way, the first array detector and the second array detector can see a same field of view region, and physical proportions of the detection region seen by the first array detector and the second array detector are the same. Therefore, the detection data obtained by the first array detector and the second array detector is aligned at a pixel level, and is easy to be fused, so that the accuracy of the detection result can be effectively improved.

In still another possible implementation of the first aspect, the beam splitting apparatus is an amplitude beam splitting apparatus. In this way, a signal-to-noise ratio of the first beam and a signal-to-noise ratio of the second beam are the same as or similar to a signal-to-noise ratio of the received beam, so that a difference between a long-range detection capability of the first array detector and a long-range detection capability of the second array detector is small. This improves the detection accuracy and the fusion effect.

In still another possible implementation of the first aspect, the beam splitting apparatus is a wavelength beam splitting apparatus. In some solutions, a transmitting module may transmit beams within two wavelength ranges, and the two array detectors may respectively receive more beams in line with wavelength ranges to which the two array detectors respond, to improve energy of optical signals received by the array detectors, improve the detection efficiency, and improve the detection accuracy.

In still another possible implementation of the first aspect, the first array detector and the second array detector are single-photon avalanche diode (single-photon avalanche diode, SPAD) array detectors.

In still another possible implementation of the first aspect, the receiving module further includes an imaging lens, and the beam from the detection region is propagated to the beam splitting apparatus through the imaging lens. In this way, the first array receiver and the second array receiver share one imaging lens. This implements a co-viewpoint of the first array receiver and the second array receiver, reduces an overall volume of the detection apparatus, and improves integration of the detection apparatus.

In still another possible implementation of the first aspect, the receiving module further includes a filter module, and the beam from the detection region is propagated to the beam splitting apparatus through the filter module. After light filtering is performed by the filter module, validity of the optical signal received by the array detector is high. This helps improve the detection accuracy of the detection apparatus.

According to a second aspect, this application provides a receiving module. The receiving module includes a beam splitting apparatus, an array detector, and an image sensor. The beam splitting apparatus is configured to split a beam from a detection region into a first beam and a second beam, the array detector is configured to receive the first beam, and the image sensor is configured to perform imaging by using the second beam. The array detector and the image detector have a same viewpoint for the detection region, and a photosensitive surface of the array detector is perpendicular to a photosensitive surface of the image sensor.

In some solutions, in an image obtained by the image sensor, it is easier to identify a contour and a color of a target, and detection data obtained by the array detector may be used to determine a distance and a point cloud of the target in the detection region. When the distance and the point cloud are fused, accuracy of target identification can be improved. In this embodiment of this application, the beams received by the array detector and the image sensor are obtained by splitting a same beam, so that fields of view of the array detector and the image sensor can overlap, and the detection data obtained by the array detector can be aligned with the data obtained by the image sensor, thereby reducing complexity of registration and calibration in a fusion process.

Further, the array detector and the image detector have the same viewpoint for the detection region, so that the first array detector and the second array detector can see a same field of view region, and physical proportions of the detection region seen by the first array detector and the second array detector are the same. The detection data obtained by the first array detector and the second array detector is aligned at a pixel level, and is easy to be fused, so that accuracy of a detection result can be effectively improved.

In a possible implementation of the second aspect, the array detector is an SPAD array detector. The image sensor is a complementary metal oxide semiconductor (complementary metal oxide semiconductor, CMOS) image sensor, for example, an RGB sensor or a mono sensor.

In a possible implementation of the second aspect, the beam splitting apparatus is a wavelength beam splitting apparatus.

In a possible implementation of the second aspect, the beam splitting apparatus is an amplitude beam splitting apparatus.

In a possible implementation of the second aspect, the receiving module further includes an imaging lens, and the beam from the detection region is propagated to the beam splitting apparatus through the imaging lens.

In a possible implementation of the second aspect, the receiving module further includes a filter module, and the filter module is disposed between the beam splitting apparatus and an array receiver.

According to a third aspect, this application provides a detection apparatus, including a transmitting module and a receiving module. The receiving module is the receiving module according to any one of the implementations of the first aspect, or the transmitting module is the receiving module according to any one of the implementations of the second aspect. The transmitting module is configured to transmit a beam to a detection region, and the receiving module is configured to receive the beam from the detection region, where the beam from the detection region includes an echo of the transmitted beam.

In a possible implementation of the third aspect, the transmitting module and the receiving module are disposed off-axis.

In a possible implementation of the third aspect, the transmitting module and the receiving module are disposed coaxially.

In a possible implementation of the third aspect, the detection apparatus includes a reflector, and the reflector is configured to reflect the transmitted beam from the transmitting module. The transmitted beam passing through the reflector is coaxial with a received beam propagating to the receiving module.

In a possible implementation of the third aspect, the detection apparatus further includes a scanning module, the transmitted beam is propagated to the detection region after passing through the scanning module, and the beam from the detection region is propagated to the receiving module after passing through the scanning module.

In a possible implementation of the third aspect, the detection apparatus further includes a bottom housing, and the bottom housing includes a bottom inner surface. The transmitting module and the receiving module are arranged in a direction parallel to the bottom inner surface of the bottom housing, or the transmitting module and the receiving module are arranged in a direction parallel to the bottom inner surface of the bottom housing.

In a possible implementation of the third aspect, the transmitting module and the receiving module are arranged in a direction parallel to the ground, or the transmitting module and the receiving module are arranged in a direction perpendicular to the ground.

According to a fourth aspect, this application provides a lidar, including the detection apparatus according to the third aspect.

According to a fifth aspect, this application provides a terminal, including the receiving module according to any one of the implementations of the first aspect or the second aspect, the detection apparatus according to the third aspect, or the lidar according to the fourth aspect. Optionally, the terminal includes an intelligent terminal or a transportation means like a vehicle, a robot, an uncrewed aerial vehicle, or a ship.

### BRIEF DESCRIPTION OF DRAWINGS

The following briefly describes accompanying drawings used in describing embodiments.
FIG. 1 is a diagram of a structure of a detection apparatus according to an embodiment of this application;
FIG. 2 is a diagram of a structure of a receiving module according to an embodiment of this application;
FIG. 3 is a diagram of a relative position of a light spot and an array detector according to an embodiment of this application;
FIG. 4 is a diagram of positions of point clouds according to an embodiment of this application;
FIG. 5 is a diagram of shapes of five types of light spots;
FIG. 6 is a diagram of a relative position of an array detector and a beam splitting apparatus according to an embodiment of this application;
FIG. 7 is another diagram of a relative position of a light spot and an array detector according to an embodiment of this application;
FIG. 8 is still another diagram of a relative position of a light spot and an array detector according to an embodiment of this application;
FIG. 9 is a diagram of a field of view according to an embodiment of this application;
FIG. 10 is a diagram of an ROI according to an embodiment of this application;
FIG. 11 is yet another diagram of a relative position of a light spot and an array detector according to an embodiment of this application;
FIG. 12 is another diagram of positions of point clouds according to an embodiment of this application;
FIG. 13 is still yet another diagram of a relative position of a light spot and an array detector according to an embodiment of this application;
FIG. 14 is still another diagram of positions of point clouds according to an embodiment of this application;
FIG. 15 is a diagram of transmittance of another dichroic mirror to beams with different wavelengths according to an embodiment of this application;
FIG. 16 is a diagram of a structure of another receiving module according to an embodiment of this application;
FIG. 17 is a diagram of a structure of a lidar according to an embodiment of this application;
FIG. 18 is a diagram of a structure of another lidar according to an embodiment of this application;
FIG. 19 is a diagram of a structure of still another lidar according to an embodiment of this application;
FIG. 20 is a diagram of a structure of yet another lidar according to an embodiment of this application; and
FIG. 21 is a diagram of an optical path of the lidar shown in FIG. 20.

### DESCRIPTION OF EMBODIMENTS

The following first explains and describes some terms in this application. It should be noted that these explanations are for ease of understanding by a person skilled in the art, and are not intended to limit the protection scope claimed in this application.

The Lagrange-Helmholtz invariant (The Lagrange-Helmholtz Invariant), or referred to as the Lagrange invariant (The Lagrange Invariant), means that during imaging of an optical system within a paraxial range, a product of a refractive index, an image height (or an object height) in any space, and an aperture angle on the axis is an invariant.

A region of interest (region of interest, ROI) is a region that needs to be processed or needs to be focused on and that is indicated by a shape of a box, a circle, an ellipse, or an irregular polygon in a detection region. The region of interest usually includes a detection target.

A light spot is a bright spot formed by a beam, and also refers to energy density (or referred to as strength or power) distribution of the beam. In embodiments of this application, the light spot may be considered as projection of a beam on a surface.

A viewpoint (viewpoint, or point of gaze) is a relative position of an observer for an observed object, that is, a position that the observer is gazing at. In the field of detection technologies, the viewpoint is a relative position between a receiving module and a detection region, or a relative position between a photosensitive surface of an optical receiver and a detected plane of the detection region. The viewpoint is a factor that determines a relative proportion of objects in an imaged picture. When the viewpoint remains unchanged, lenses with different focal lengths can only be used to proportionally zoom in or zoom out the picture, but perspective remains unchanged (namely, a perspective point), that is, a relative proportion of the objects in the picture remains unchanged. In some solutions, for a single lens, the viewpoint is an entrance pupil position. For a scanning-type detection apparatus, the viewpoint may be an intersection point of principal axes of different beam positions in a scanning direction.

A point cloud is an aggregation or a set of points. The point (also referred to as a target point or a data point) herein usually indicates a feature of a target. For example, the point indicates one or more pieces of information of a position (for example, a one-dimensional, two-dimensional, or three-dimensional coordinate position), a distance, an angle, reflection strength, a color, and the like.

The explanations of the foregoing terms may be used below.

A detection apparatus implements detection of a detection region, for example, ranging, speed measurement, or azimuth measurement by using a signal as a detection medium, transmitting the signal to the detection region (namely, object space), and receiving an echo of the signal. A transmitting end and a receiving end are disposed in the detection apparatus. The transmitting end is configured to transmit a signal, and the receiving end is configured to receive a signal. The signal herein includes light, for example, laser light. When light is used for detection, an optical module is disposed in the detection apparatus to process the beam. "Processing" herein includes one or more of beam splitting, light filtering, convergence, divergence, refraction, light filtering, reflection, scanning, or the like.

With development of intelligence, a device has an increasingly high requirement on detection accuracy of the detection apparatus. In some solutions, detection accuracy is improved by expanding a scale of a detection chip at the receiving end. A large-scale detection chip can receive a larger imaging light spot, and a detection result obtained based on the imaging light spot is more refined, thereby improving the detection accuracy. However, it can be learned from the Lagrange-Helmholtz invariant that, in this case, a volume of the optical module used for imaging also needs to be increased proportionally. As a result, an overall volume of the detection apparatus also increases correspondingly. This is not conducive to miniaturization development of a lidar, and limits installability and installation flexibility of the detection apparatus. For example, the detection apparatus is usually disposed in a terminal. For example, the detection apparatus is disposed in a vehicle. Because there are a large quantity of components in the vehicle, an installation position of the large-volume lidar in the vehicle is severely limited, and it is difficult for a vehicle manufacturer to strike a balance between an appearance design of the vehicle, a cockpit comfort design, and a field of view design of the detection apparatus. In addition, a larger scale of the detection chip indicates larger thermal load and a higher heat dissipation requirement. This not only increases chip packaging difficulty, but also causes the detection apparatus and the terminal in which the detection apparatus is located to face a greater reliability risk.

In view of this, embodiments of this application provide some receiving modules, a detection apparatus, a lidar, and a terminal, to improve detection accuracy without significantly increasing an overall volume.

The following first describes the detection apparatus provided in embodiments of this application. The detection apparatus includes a transmitting module and a receiving module.

The transmitting module is configured to transmit a beam, and the transmitted beam may also be referred to as detection light. For example, the transmitting module may include one or more of the following light sources: a vertical cavity surface emitting laser (vertical cavity surface emitting laser, VCSEL), a photonic crystal surface emitting laser (photonic crystal surface emitting semiconductor laser, PCSEL), an edge emitting laser (edge emitting laser, EEL), a laser diode (laser diode, LD), a distributed feedback laser diode (distributed feedback LD, DFB-LD), a grating-coupled sampling reflection laser diode (grating-coupled sampling reflection LD, GCSR-LD), a micro-opto-electro-mechanical system laser diode (micro-opto-electro-mechanical system LD, MOEMS-LD), or the like.

In a possible implementation, the transmitting module includes a laser transmitting chip, and the laser transmitting chip includes one or more of the foregoing light sources. In a possible case, the transmitting module includes one VCSEL chip. In another possible case, the transmitting module includes a laser transmitting chip formed by splicing a plurality of VCSEL chips. On one hand, the plurality of VCSEL chips are spliced, so that transmitting power of the detection apparatus can be increased, a blind spot of the detection apparatus can be reduced, and detection performance can be improved. On the other hand, in a case of a same area of a light transmitting region, splicing the plurality of VCSEL chips has less stress than directly using an entire VCSEL chip of an approximate size, and multi-chip splicing further has higher heat dissipation efficiency and can reduce crosstalk.

The receiving module is configured to receive the beam, and the received beam includes return light of the transmitted beam. The receiving module may include a beam splitting apparatus and a plurality of groups of optical receivers. The beam splitting apparatus is configured to split the beam into a plurality of sub-beams, and each group of detectors is configured to receive one sub-beam.

The following first describes the beam splitting apparatus in the receiving module. In this application, the beam splitting apparatus may perform beam splitting based on an amplitude, a wavelength, or the like. The following separately provides descriptions.

In a possible implementation, the beam splitting apparatus is an amplitude beam splitting apparatus, for example, a semi-transmissive semi-reflective beam splitter. The semi-transmissive semi-reflective beam splitter can split one beam of light into two beams of light whose spectral compositions are approximately the same. In some solutions, in a specific wavelength region, for example, within a wavelength range of 300 nanometers (nm) to 100 micrometers (µm), the semi-transmissive semi-reflective beam splitter has same transmittance and reflectivity for light with all wavelengths. It should be understood that the same herein does not necessarily mean completely the same, for example, a difference between the two is about 10%. Usually, a beam splitter whose transmitted light and reflected light respectively account for 50% is commonly used. However, this application is also applicable to a beam splitter with another transmittance ratio (reflection ratio), for example, a beam splitter with 40% transmittance and 60% reflectivity.

In another possible implementation, the beam splitting apparatus is a wavelength beam splitting apparatus, for example, a dichroic mirror. The dichroic mirror is an optical component that has different reflectivity and transmittance properties for light with different wavelengths, and may also be referred to as a dichroic beam splitter (dichroic beam splitter), a dichroic filter (dichroic filter), a dichroic splitter, or the like. For example, a dichroic mirror has low reflectivity within a wavelength range of wavelengths less than 750 nm, and has high reflectivity within a wavelength range of wavelengths greater than 800 nm. In other words, most of an optical signal whose wavelength is less than 750 nm is transmitted when passing through the dichroic mirror, and most of an optical signal whose wavelength is greater than 800 nm is reflected when passing through the dichroic mirror.

Optionally, the beam splitting apparatus includes one or more of a prism (namely, a beam splitting prism), an optical flat (namely, a beam splitting plate), a metalens, or the like.

In a possible implementation, the beam splitting apparatus is a beam splitting prism. On one hand, the beam splitting prism has a low requirement on a back focal length of an imaging lens, that is, the back focal length of the imaging lens may be designed to be short, thereby reducing space and facilitating miniaturization development of the detection apparatus. On the other hand, when the beam splitting prism is used to perform beam splitting, a requirement on an incident angle of a beam on a beam splitting surface of the prism is low, thereby reducing difficulty in designing an optical path. In addition, optical paths of two sub-beams obtained through splitting by using the beam splitting prism are the same, so that registration effect can be improved.

In still another possible implementation, the beam splitting apparatus is a beam splitting plate, and costs of the beam splitting plate are low. This helps reduce overall costs of the detection apparatus.

The following describes the optical receiver in the receiving module. The optical receiver includes an optical-to-electrical conversion cell (or referred to as a photoelectric detector). The optical-to-electrical conversion cell is configured to receive an optical signal and output an electrical signal. Types of optical-to-electrical conversion cells included in the plurality of groups of optical receivers may be the same or different. Alternatively, when there are more than three optical receivers, types of optical-to-electrical conversion cells of a part of the receivers are the same.

In a possible example, the plurality of groups of optical receivers include one or more detectors configured to obtain point clouds (or time of flight information, depth information, or ranging information), which are briefly referred to as detectors below, and are also referred to as radar detectors, ranging detectors, or the like in some solutions. In this specification, the optical-to-electrical conversion cell in the detector is referred to as a detection cell. The detector includes one or more of the following detection cells: a single-photon avalanche diode (single-photon avalanche diode, SPAD), a silicon photomultiplier (silicon photomultiplier, SiPM), a multi-pixel photon counter (multi-pixel photon counter, MPPC), a semiconductor avalanche photodiode (avalanche photo detector, APD), a "positive-intrinsic-negative" (positive-intrinsic-negative, PIN) diode (or referred to as a P-type semiconductor-impurity-N-type semiconductor diode), or the like. When the detector includes a plurality of detection cells, the plurality of detection cells may be arranged in an array to form an array detector. For example, the receiving module includes an SPAD array detector.

In some solutions, in addition to the return light, the received beam further includes background light, and the background light is formed by light of another light source (namely, a light source other than the transmitted beam) reflected by an object (including a living object) in the detection region. The another light source includes the sun and lamps (such as a street lamp and a vehicle lamp).

In a possible implementation, the plurality of groups of optical receivers include an image sensor. In this application, an optical-to-electrical conversion cell in the image sensor is referred to as a photosensitive unit. The photosensitive unit includes one or more of the following units: a complementary metal oxide semiconductor (complementary metal oxide semiconductor, CMOS), a charge-coupled device (charge-coupled device, CCD), a live MOS, and the like. For example, the image sensor includes a CMOS image sensor (CMOS image sensor, CIS), and the CIS is configured to convert an optical image into an electronic signal.

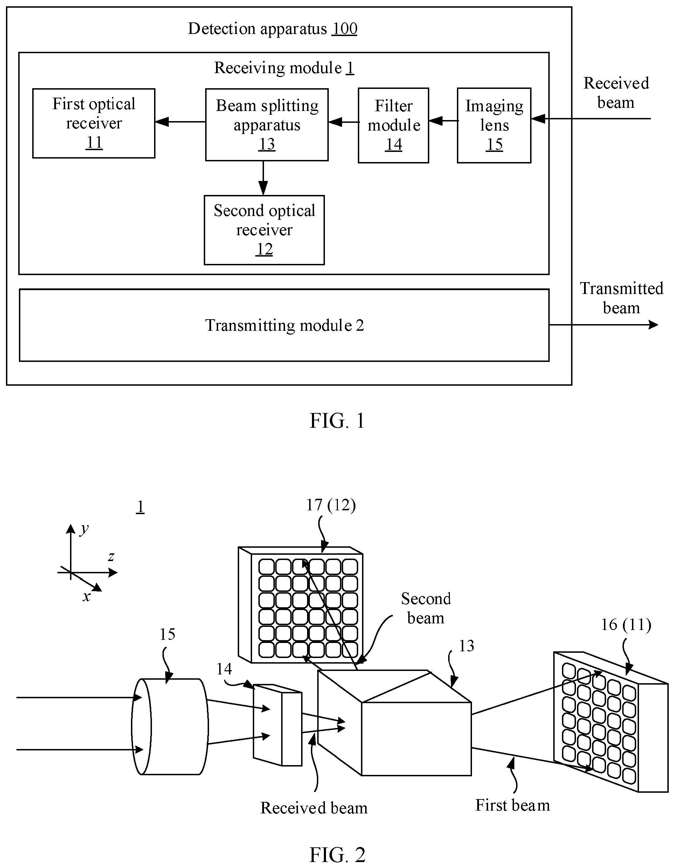

With reference to FIG. 1, the following describes a structure of the detection apparatus by using an example in which the receiving module includes two optical receivers. As shown in FIG. 1, a detection apparatus 100 includes a receiving module 1 and a transmitting module 2. The transmitting module 2 is configured to generate a transmitted beam, and the transmitted beam is propagated to a detection region. The receiving module 1 is configured to receive the beam, and a return beam includes the beam from the detection region. The receiving module 1 includes a beam splitting apparatus 13. The beam splitting apparatus 13 splits the received beam into two sub-beams, and respectively provides the two sub-beams for a first optical receiver 11 and a second optical receiver 12. The first optical receiver 11 and the second optical receiver 12 each receive one of the sub-beams. The two sub-beams are obtained by splitting the same received beam. Therefore, the two beams correspond to the same detection region. That the two optical receivers are configured to respectively receive the two sub-beams means that two groups of detection data with a consistent field of view or overlapping fields of view are obtained through one time of receiving. The two groups of detection data can reflect detection results on the same detection region, so that the detection apparatus simultaneously performs detection on the detection region twice. This can significantly improve detection accuracy, and ensure detection efficiency. Further, the two groups of detection data are used for fusion to obtain a detection result on the detection region. Because there is no parallax between the two groups of detection data, computing complexity of a fusion process can be greatly reduced, and accuracy of the detection result obtained through fusion can be improved.

In addition, because the optical receiver is located at an end of an optical path of the return beam, and a light spot of the beam is small, adding an optical receiver does not cause a receiving optical system to increase proportionally, and therefore does not significantly affect an overall volume of the detection apparatus. Because a size of the optical system does not need to be increased, costs of the optical element of the detection apparatus can be further reduced in this application. In addition, thermal load of the two optical receivers that are disposed separately does not significantly increase, thereby reducing heat dissipation pressure of the detection apparatus and a device on which the detection apparatus is installed.

In some possible implementations, the transmitting module 2 and the receiving module 1 are designed off-axis, and an off-axis architecture is an optical path architecture in which a principal axis of the beam transmitted by the transmitting module 2 does not coincide with a principal axis of the receiving module 1. In this application, the off-axis design causes the transmitted beam not to pass through an optical element in the receiving module 1, and an optical element does not need to be disposed in the detection apparatus 100 to implement coaxial transmitting and receiving. This improves integration of the receiving module 1, helps reduce costs of the detection apparatus, and reduces the overall volume of the detection apparatus. In addition, compared with a coaxial architecture, isolation between a transmitting optical path and a receiving optical path in the off-axis architecture is high, so that spurious interference can be avoided to some extent, and validity of the received signal can be improved.

In some possible implementations, the transmitting module 2 and the receiving module 1 are designed coaxially. A coaxial design is an optical path architecture in which the principal axis of the beam transmitted by the transmitting module 2 coincides with the principal axis of the receiving module 1. Optionally, the detection apparatus further includes a coaxial module. The coaxial module is configured to cause the transmitting optical path of the transmitting module 2 to coincide with the receiving optical path of the receiving module 1. For example, the coaxial module includes a reflector, or the coaxial module includes a polarization beam splitter, a wave plate, a semi-transmissive semi-reflective beam splitter, or a beam splitter with another split ratio.

Optionally, the transmitting module 2 and the receiving module 1 are arranged in a direction perpendicular to the ground, or arranged in a direction parallel to the ground. The ground may be replaced with a bottom housing.

In some possible implementations, the receiving module further includes an imaging lens, and the return beam passes through the imaging lens and reaches the receiving module. With reference to FIG. 1, the two optical receivers share an imaging lens 15. This not only helps implement a co-viewpoint of the two optical receivers, but also reduces the overall volume of the detection apparatus 100, and improves integration of the detection apparatus 100.

Optionally, no optical element that can change focal power is disposed on an optical path from the beam splitting apparatus 13 to the first optical receiver 11 and on an optical path from the beam splitting apparatus 13 to the second optical receiver, that is, the two optical receivers share the imaging lens and have a same imaging ratio. This can improve complexity of registration between the detection data obtained by the first optical receiver and the detection data obtained by the second optical receiver, and significantly improve the detection accuracy.

In some possible implementations, the detection apparatus further includes a filter module. The filter module is configured to filter the beam from the detection region, to improve the validity of the signal received by the optical receiver. For example, the filter module may include a band-pass filter, for example, a narrow-band filter. The band-pass filter allows an optical signal to pass through in a specific band and prevents an optical signal deviating from the band. A passband of the narrow-band filter has a narrower bandwidth, and the bandwidth is usually less than 5% of a center wavelength. For example, a narrowband means that a bandwidth is less than or less than or equal to 40 nanometers (nm), for example, 22 nm, 21 nm, or 20 nm. For example, when a wavelength of light transmitted by the transmitting module is 1550 nm, a wavelength range transmissible by the narrow-band filter is a wavelength range including 1550 nm, and a bandwidth of the transmissible wavelength range is not higher than 20 nm. In this way, interference of background light can be greatly reduced, validity of a received beam can be improved, and the detection accuracy can be improved.

Optionally, the filter module may be disposed at an ingress end of the beam splitting apparatus, and the received beam is propagated to the beam splitting apparatus after passing through the filter module. With reference to FIG. 1, in the detection apparatus 100 including the imaging lens 15, the filter module 14 is disposed on an optical path between the imaging lens 15 and the beam splitting apparatus 13. A size of a beam passing through the imaging lens 15 is usually small. In this case, a size of the filter module 14 can be correspondingly designed to be small, and the two optical receivers may share the filter module 14, to further reduce the overall volume of the detection apparatus 100.

Optionally, a position of the filter module shown in FIG. 1 is merely an example. In some solutions, the filter module may alternatively be disposed between the optical receiver and the beam splitting apparatus. For example, the detection apparatus 100 includes one filter module, and the filter module 14 is disposed between the beam splitting apparatus 13 and the first optical receiver 11. For another example, the detection apparatus 100 includes two filter modules, and the filter module 14 is disposed between the beam splitting apparatus 13 and the second optical receiver 11.

The embodiment shown in FIG. 1 includes a plurality of possible designs. The following describes the receiving module provided in this application with reference to FIG. 2 to FIG. 15. Optionally, the receiving module described below may be used in the detection apparatus 100. It should be understood that embodiments of this application may be combined. For example, embodiments described below may be combined with the foregoing embodiment of the detection apparatus, and the following embodiments may also be combined.

In a possible design, the receiving module includes a plurality of detectors. As shown in FIG. 2, the receiving module 1 includes the beam splitting apparatus 13, a first array detector 16 (which may be considered as the first optical receiver 11), and a second array detector 17 (which may be considered as the second optical receiver 12). The beam splitting apparatus 13 is configured to split a received beam into a first beam and a second beam, the first beam forms a first light spot on the first array detector 16, and the second beam forms a first light spot on the second detector. The received beam includes a beam from the detection region. The first array detector 16 and the second array detector 17 can obtain, based on obtained beam energy, information about the detection region, including one of more pieces of information of time of flight (time of flight, TOF) information, and a distance, a position, an angle, reflectivity, a color, or the like of a target in the detection region.

Further, the first array detector 16 obtains energy of the first beam to obtain first detection data, and the second array detector 17 obtains energy of the second beam to obtain second detection data. The first detection data and the second detection data are fused to obtain point clouds of the detection region. Optionally, positions of the first array detector 16 and the second array detector 17 may be replaced with each other.

In some possible implementations, a relative position of the first light spot on the first array detector 16 is different from a relative position of the second light spot on the second array detector 17. The relative position is a position of a position point on the light spot relative to a same or corresponding position point on the two array detectors, for example, a relative position of a center of the light spot relative to a center of the array detector, and for another example, a relative position of a vertical center of the light spot relative to a vertical center of the array detector.

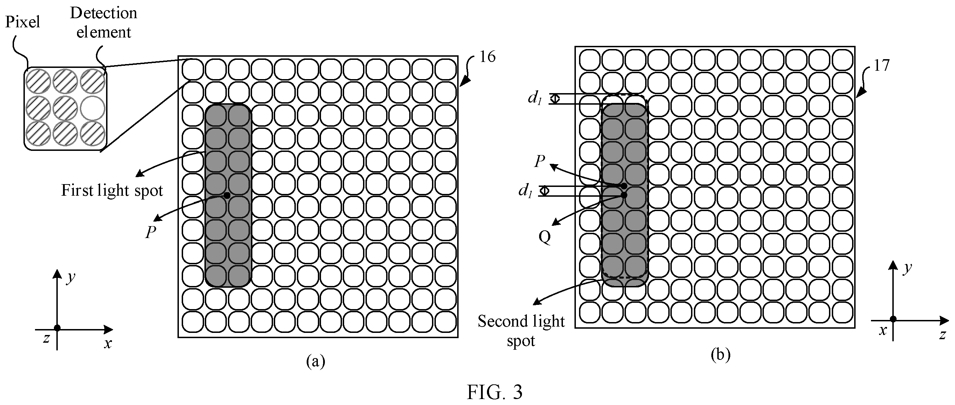

For example, there is an offset between the relative position of the first light spot on the first array detector 16 and the relative position of the second light spot on the second array detector 17, which is referred to as a first offset for ease of distinguishing. (a) in FIG. 3 is a diagram of the relative position of the first light spot on the first array detector 16. In a first direction (for example, a Y direction), a center of the first light spot is a point P, and the point P coincides with a center of the first array detector 16 in the first direction. (b) in FIG. 3 is a diagram of the relative position of the second light spot on the second array detector 17. In the first direction, a center of the second light spot is a point Q, and the point Q does not coincide with a center of the second array detector 17 in the first direction. In FIG. 3, a position of the first light spot on the first array detector is shown in a dashed-line region in (b) in FIG. 3. There is an offset between a position of the second light spot and the position of the first light spot, and the offset in the first direction may be indicated by *d*₁.

The positions of the two light spots on the array detectors are offset, so that distribution regions of the beam energy obtained by the first array detector 16 and the second array detector 17 are staggered, and in the detection results obtained by the first array detector 16 and the second array detector 17, positions of target points can be interwoven with each other. This effectively improves point cloud density and fusion effect, and improves the detection accuracy on the detection region. For example, in (a) in FIG. 3, a part of a light ray in the first light spot falls into a gap between pixels, and as shown in (b) in FIG. 3, in the second light spot, the part of the light ray may fall into a pixel after being offset. This improves comprehensiveness of obtaining the light spot energy, improves the detection accuracy of the detection apparatus, and significantly improves the point cloud density.

In a possible case, if a center of a light ray reflected by a target A in the detection region falls into a pixel gap, a part or all of energy of the light ray reflected by the target A may be lost. Even if only a part of the energy is lost, another part of the energy may be dispersed to a plurality of pixels. However, energy dispersed in a single pixel may not reach a detection threshold of the single pixel. As a result, the target A may not be successfully detected. However, according to the staggered design of the two array detectors in this application, when the light reflected by the target A falls into a gap between pixels of the first array detector, on the second array detector, the light reflected by the target A may fall into a pixel, thereby greatly improving a possibility of sensing the target A, and improving the point cloud density and the detection accuracy.

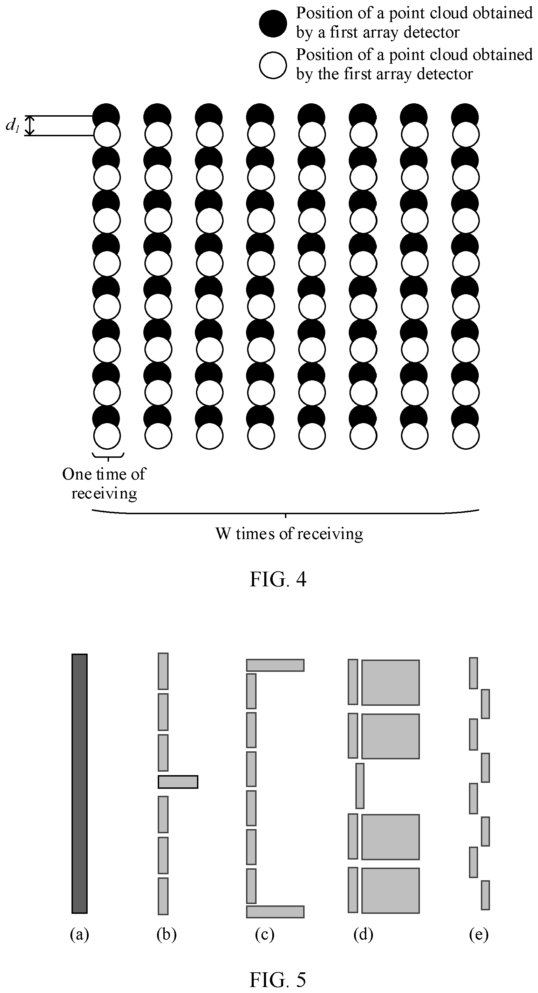

With reference to FIG. 4, for ease of description, the distribution region of the beam energy obtained by the array detector is indicated in a form of positions of point clouds herein. In a case of one time of receiving, in this application, positions of point clouds of the first array detector 16 and positions of point clouds of the second array detector 17 are interwoven with each other through the first offset *d*₁, so that the first array detector 16 and the second array detector 17 complement gaps between positions of point clouds of each other, and two sets of point clouds nested with each other can be formed. This effectively improves the point cloud density. Certainly, in this application, when a detection result of a complete field of view is obtained through a plurality of times (for example, W times, where W is a positive number and W≥2) of detection (in this case, one beam position in the field of view can be detected through one time of detection), the point cloud density and the detection accuracy can also be improved.

In this specification, a pixel (pixel) is a basic unit of an image (including a point cloud and a picture), and also indicates a sample. In the field of computer vision, information about a pixel is usually obtained through outputs of one or more optical-to-electrical conversion cells. Therefore, the pixel also indicates an optical-to-electrical conversion cell or an optical-to-electrical conversion cell group in the optical receiver. The pixel commonly used in this field refers to one or more optical-to-electrical conversion cells (or briefly referred to as cells). Further, when a plurality of cells are included, the plurality of cells in the pixel may be arranged in an array. For example, in the array detector, one pixel includes detection cells in A rows and B columns, A is an integer and A≥1, and B is a positive number and B≥1. As shown in FIG. 3, one pixel includes detection cells in three rows and three columns (indicated by 3*3).

It should be noted that the received beam in this example of this application may be in a linear shape or a planar shape. Similarly, the first beam and the second beam are correspondingly in the linear shape or the planar shape. With reference to (a), (b), (c), (d), and (e) in FIG. 5, when the received beam is a linear beam, a length of the received beam in the first direction is greater than a length of the received beam in a second direction. Optionally, the linear beam may be a line, for example, (a) in FIG. 5, or the linear beam may be a linear beam obtained by splicing a plurality of beams, for example, (b), (c), (d), and (e) in FIG. 5. Further, when the received beam includes a plurality of beams, the transmitting module correspondingly includes a plurality of light sources to form the plurality of beams. In some solutions, transmitting power of the plurality of light sources is the same. In some other solutions, the transmitting power of the plurality of light source is different. In some solutions, wavelengths of the light transmitted by the plurality of light sources are the same. In some other solutions, the wavelengths of the plurality of light sources are different.

In some possible implementations, a size of a photosensitive surface of the first array detector 16 is the same as a size of a photosensitive surface of the second array detector 17. The photosensitive surface may also be referred to as a target surface, and indicates an area of a photosensitive region that can receive an optical signal (or a peripheral area of a plurality of optical-to-electrical conversion cells).

In some possible implementations, a pixel size of the first array detector 16 is the same as a pixel size of the second array detector 17. Further, quantities and arrangement manners of pixels of the first array detector 16 and the second array detector 17 are also the same. As shown in FIG. 3, in the first array detector 16 and the second array detector 17, one pixel includes 2*2 detection cells, and the quantities and arrangement manners of pixels of the first array detector 16 and the second array detector 17 are the same. Certainly, this application is also applicable to a case in which the photosensitive surfaces of the first array detector 16 and the second array detector 17 are different. For example, the pixel sizes of the first array detector 16 and the second array detector 17 are the same, but the quantities of pixels are different. For example, the first array detector has 256*256 pixels, and the second array detector has 200*200 pixels. Optionally, in this case, the relative position of the light spot is a position relative to a center (for example, a center in a direction, or a center in a plurality of directions) of the array detector.

In a possible example, the photosensitive surface of the first array detector is the same as the photosensitive surface of the second array detector. "Same" herein includes that the sizes of the photosensitive surfaces are the same, and the sizes, the quantities, and the arrangement manners of the pixels in the two array detectors are the same.

As described above, there is the offset between the relative position of the first light spot on the first array detector 16 and the relative position of the second light spot on the second array detector 17. For ease of understanding, the following describes two offset implementations:

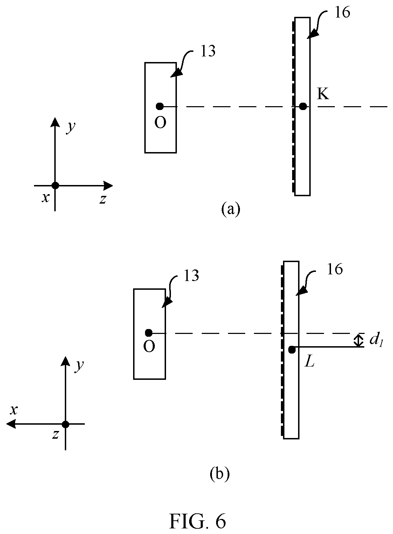

Implementation 1: There is an offset between a relative position of the first array detector 16 and a center of the beam splitting apparatus 13 and a relative position of the second array detector 17 and the center of the beam splitting apparatus 13. As shown in (a) in FIG. 6, in the first direction (the Y direction shown in FIG. 6), the center of the beam splitting apparatus is indicated by a point O, a midpoint of the first array detector 16 is a point K, and the point O and the point K have a same position in the first direction. As shown in (b) in FIG. 6, in the first direction (the Y direction shown in FIG. 6), the center of the beam splitting apparatus is indicated by a point O, a center of the second array detector 17 is a point L, and there is the first offset *d*₁ between positions of the point O and the point L in the first direction. The principal axis of the beam passes through the center of the beam splitting apparatus and reaches the array detector. Therefore, the positions of the array detectors are offset, so that there is the first offset *d*₁ between the relative position of the first light spot on the first array detector 16 and the relative position of the second light spot on the second array detector 17 in the first direction.

Implementation 2: The relative position of the first light spot on the first array detector 16 and the relative position of the second light spot on the second array detector 17 are offset via an optical element. For example, the light spot of the first beam is offset in the first direction via an optical element like a reflector or a prism, so that the light spot falls into a relative position different from that of the second light spot.

The foregoing two implementations may be combined.

In some possible implementations, the first array detector 16 and the second array detector 17 each include at least K rows of pixels, where K is a positive number and K≥2. The first offset is a length of (N+0.5) pixels, where N is an integer less than K, and N≥0. Further, the first offset is an offset in the first direction, and the first direction is a column direction of the first array detector 16 and the second array detector 17. With reference to FIG. 3, the first array detector and the second array detector each include 12 rows of pixels, and in the first direction, the first offset is *d*₁, where 0.5*y*₁ < *d*₁ < (11 + 0.5)*y*₁, and *y*₁ is a width of one pixel.

In some solutions, the quantity of pixels in the first array detector 16 is the same as the quantity of pixels in the second array detector 17. For example, the first array detector 16 and the second array detector 17 each include M pixels, where M is a positive number and M≥K. When the quantities of pixels of the first array detector 16 and the second array detector 17 are the same, the detection data obtained by the first array detector 16 and the second array detector 17 is more easily registered, so that the point clouds obtained through fusion have a high resolution, and the detection accuracy is improved.

Optionally, the pixel may alternatively be replaced with the detection cell. In other words, the first array detector and the second array detector each include at least H rows of detection cells, where H is a positive number and H≥2. The first offset is a length of (N+0.5) detection cells, N is an integer less than H, and N≥0.

In some possible implementations, a light spot that is of the first beam and that falls into a receivable region of the first array detector overlaps a light spot that is of the second beam and that falls into a receivable region of the second array detector. In this case, energy is obtained twice in the overlapping region, thereby significantly improving the detection accuracy. For example, in FIG. 3, all of the light spot of the first beam falls into the receivable region of the first array detector 16, and all of the light spot of the second beam also falls into the receivable region of the second array detector. In this case, the first light spot and the second light spot completely overlap. The first array detector and the second array detector separately obtain energy once from two beams obtained by splitting a same received beam, so that a quantity of lines can be doubled, thereby improving the detection accuracy.

Optionally, in the receivable region of the array detector, the detection cell in an enabled state (or referred to as in operation) can obtain the energy of the light spot. A reason why energy cannot be obtained from a part of the light spot that is beyond the receivable region may be that the part is beyond the array detector, and/or the part is in the array detector but a detection cell in a corresponding position is not turned on.

In some possible implementations, the relative position of the first light spot on the first array detector 16 overlaps the relative position of the second light spot on the second array detector 17. When only a part of the light spot of the first beam falls into the first array detector 16 and/or only a part of the light spot of the second beam falls into the second array detector 17, energy is obtained twice in the overlapping region of the relative positions, thereby significantly improving the detection accuracy.

The following further lists two types of possible light spot distribution:

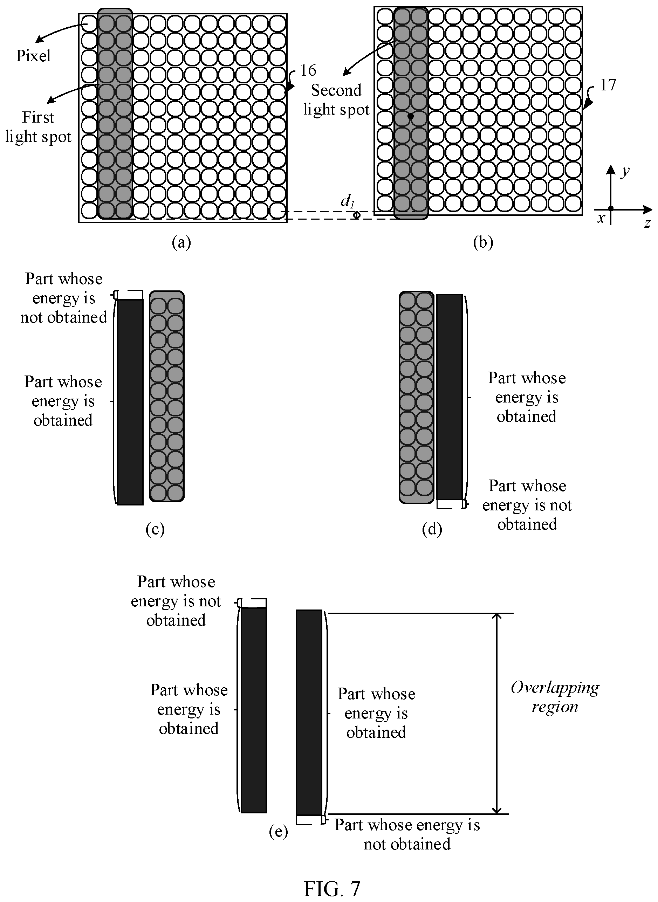

Example 1: The first offset is a width of half a pixel, and the relative position of the first light spot on the first array detector overlaps the relative position of the second light spot on the second array detector. Refer to FIG. 7. (a) in FIG. 7 shows distribution of the first light spot on the first array detector 16, and a part of the first light spot (namely, the light spot of the first beam) falls into the receivable region (namely, a region in which the light spot energy can be obtained) of the first array detector 16, but a part of the first light spot does not fall into the receivable region of the first array detector 16. It can be learned with reference to (c) in FIG. 7 that, in the first light spot, a part whose energy is obtained is in black, and a part whose energy is not obtained is in white. Similarly, with reference to (b) and (d) in FIG. 7, a part of the second light spot falls into the receivable region of the second array detector 17, but a part of the second light spot does not fall into the receivable region of the second array detector 17.

With reference to (a) and (b) in FIG. 7, in the first direction (namely, the y direction), the first offset (namely, *d*₁ shown in FIG. 7) is $\frac{1}{2}$ of a width of one pixel in the y direction. It can be learned with reference to (e) in FIG. 7 that, the receiving positions of the two light spots are staggered by the width of half the pixel, so that parts that are in the first light spot and the second light spot and whose energy is obtained overlap largely. This greatly improves accuracy of the detection result.

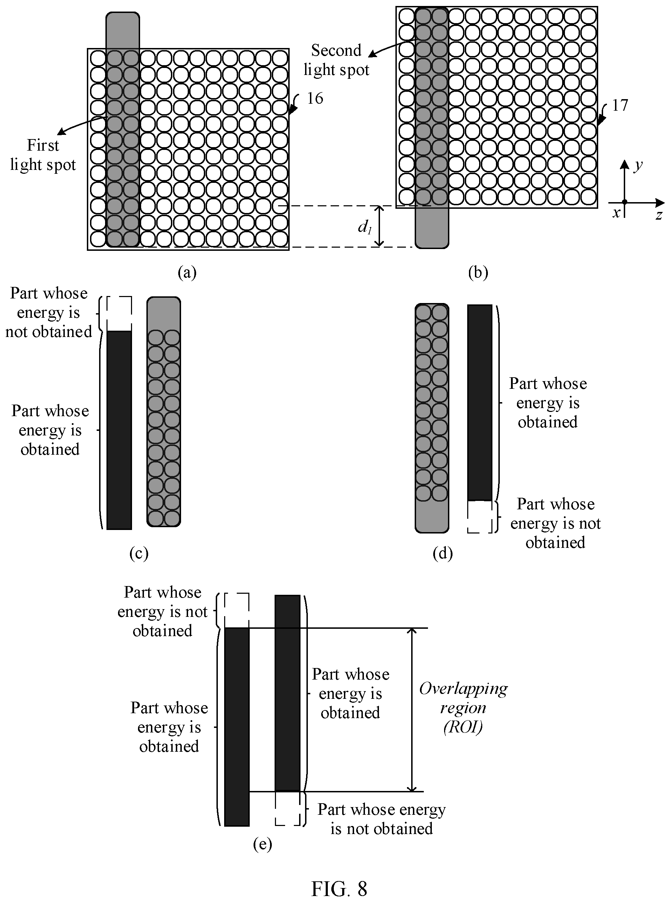

Example 2: The first offset is a width greater than half a pixel, there is an overlapping region between the relative position of the first light spot on the first array detector 16 and the relative position of the second light spot on the second array detector 17, and the overlapping region is an ROI. Refer to FIG. 8. (a) and (c) in FIG. 8 show distribution of the first light spot on the first array detector 16, and a part of the first light spot falls into the receivable region of the first array detector 16, but a part of the first light spot does not fall into the receivable region of the first array detector 16. Similarly, with reference to (b) and (d) in FIG. 8, a part of the second light spot falls into the receivable region of the second array detector 17, but a part of the second light spot does not fall into the receivable region of the second array detector 17.

With reference to (a) and (b) in FIG. 8, in the first direction (namely, the y direction), the first offset *d*₁ is greater than $\frac{1}{2}$ of a width of one pixel in the y direction. For example, the first offset is $\left(N+\frac{1}{2}\right) {y}_{1}$, where N≥1. For example, N may be $\frac{1}{2} , \frac{1}{3}$, or the like of a quantity of rows of pixels in the array detector. It can be learned with reference to (e) in FIG. 8 that, the receiving positions of the two light spots are staggered by the width greater than half the pixel, so that parts that are in the first light spot and the second light spot and whose energy is obtained overlap. This means that detection is performed on the overlapping region twice, and the point cloud density can be doubled, thereby greatly improving the accuracy of the detection result.

With reference to the foregoing solution, in some scenarios, the region in which the relative positions of the first light spot and the second light spot overlap is the ROI. Specifically, when the two array detectors are staggered, the overlapping region is a middle region of the first light spot and the second light spot. This means that repeated detection is performed on a middle region of the field of view. A value of the first offset is designed, so that the overlapping region can be controlled and the field of view can be adjusted, and the overlapping region of the light spots covers the ROI. This precisely improves the detection accuracy of the detection result within the ROI.

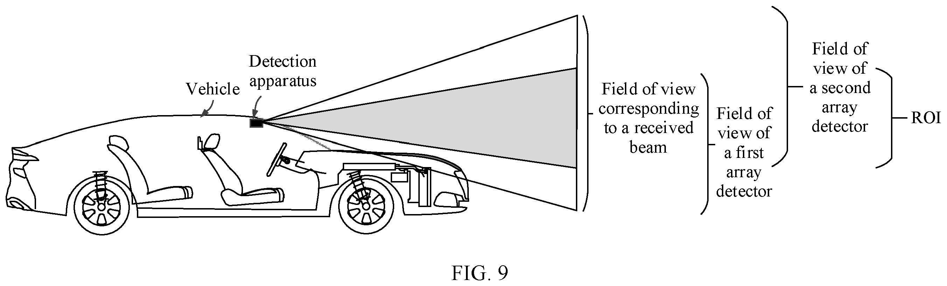

FIG. 9 is a diagram of fields of view corresponding to the first array detector and the second array detector according to this application. A field of view of the first beam obtained by splitting the received beam is the same as a field of view of the received beam, and because the first array detector obtains a part of the first light spot corresponding to the first beam, the field of view of the first array detector is a part of the field of view of the received beam. Similarly, a field of view of the second array detector is also the other part of the received beam, and there is an offset between the field of view of the second array detector and the field of view of the first array detector, and the two fields of view overlap. With reference to FIG. 7, FIG. 8, and FIG. 9, the overlapping part between the field of view of the first array detector and the field of view of the second array detector is the ROI. In this way, the first offset is adjusted, so that the field of view corresponding to the receiving module can be adjusted. This improves design flexibility of the detection apparatus. When the first offset is designed to be large, the detection apparatus has a large field of view, and can further cover the ROI, thereby improving detection performance.

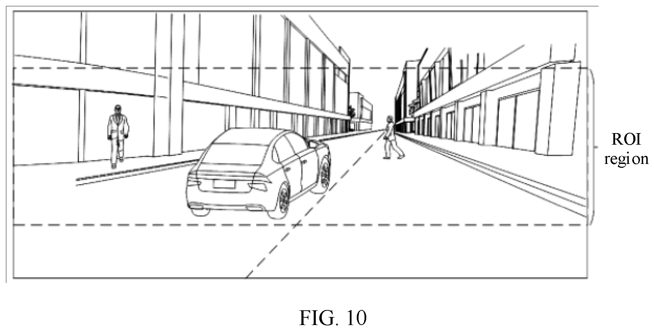

In some cases, a value of a detection result in a middle region of the field of view is higher than a value of a detection result in an edge region of the field of view. For example, a vehicle sensing scenario is used as an example. With reference to FIG. 9 and FIG. 10, in a vertical direction, a central region of the field of view is space to which a vehicle is likely to travel, a target like an obstacle, a front vehicle, or a lane line in the central region of the field of view affects traveling of the vehicle, and a detection result within the region is of a greater value to driving decision-making and safety assurance decision-making. Therefore, the central region of the field of view is usually the ROI. However, in this application, the first offset is designed, so that the relative positions of the first light spot and the second light spot overlap. In this way, the ROI can be detected a plurality of times in one time of lighting. This improves the detection accuracy of the ROI, ensures the detection efficiency, and helps improve driving safety of the vehicle. Especially for an intelligent driving system, higher detection accuracy of the ROI indicates higher efficiency, which is more conducive to computing and decision-making of the intelligent driving system, thereby improving safety and comfort of the intelligent driving system. Certainly, only vehicle sensing is used as an example herein. This application is also applicable to a scenario like surveying and mapping or robot sensing.

An example in which there is the offset between the position of the first light spot on the first array detector and the position of the second light spot on the second array detector in the first direction is used for description above. In a possible implementation, in a second direction, there is also an offset between the position of the first light spot on the first array detector and the position of the second light spot on the second array detector, which is referred to as a second offset for ease of distinguishing. The first direction is different from the second direction, for example, the second direction is perpendicular to the second direction.

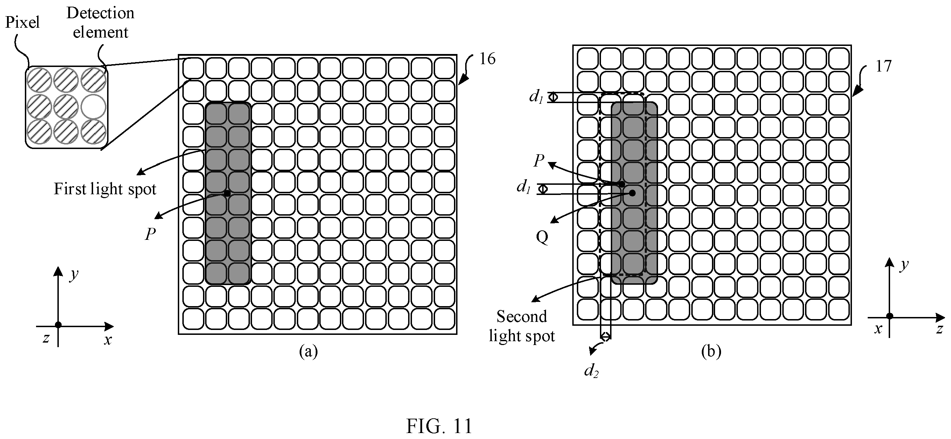

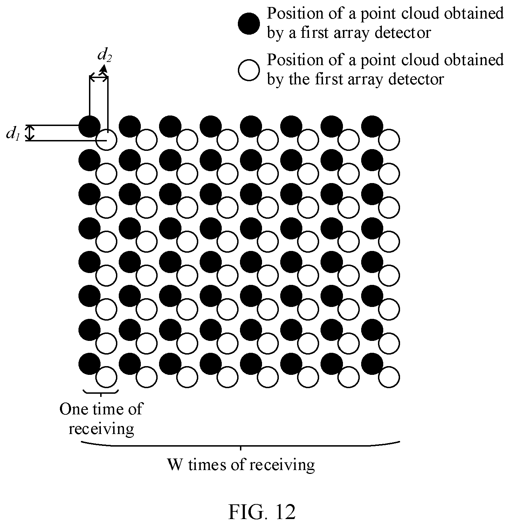

With reference to FIG. 11, in the first direction (for example, a Y direction), there is the first offset *d*₁ between the relative position of the first light spot on the first array detector and the relative position of the second light spot on the second array detector, and in the second direction (for example, a Y direction of the first array detector or an X direction of the second array detector), there is the second offset *d*₂ between the relative position of the first light spot on the first array detector and the relative position of the second light spot on the second array detector. Refer to FIG. 11. (a) in FIG. 11 is a diagram of the relative position of the first light spot on the first array detector 16, a center of the first light spot is a point P, and the point P coincides with a center of the first array detector in the first direction. (b) in FIG. 11 is a diagram of the relative position of the second light spot on the second array detector 17, a center of the second light spot is a point Q, and the point Q does not coincide with the center of first array detector in the first direction. In addition, there is the first offset *d*₁ between the point P and the point Q in the Y direction, and there is the second offset *d*₂ between the point P and the point Q in the Z direction. Refer to FIG. 12. A region in which the light spot is received is designed to be offset in two directions, so that positions of point clouds are interwoven and nested in the two directions, and a gap between the positions of the point clouds is further reduced. This effectively improves the point cloud density. Certainly, in this application, when a detection result of a complete field of view is obtained through a plurality of times (for example, W times) of detection, the point cloud density and the detection accuracy can also be improved.

It should be noted that the first array detector and the second array detector are disposed in a same absolute XYZ coordinate system herein, so that the second direction is the Y direction at an angle of view the first array detector, and is the X direction at an angle of view of the second array detector. However, actually, with reference to FIG. 2, it can be learned that the Y direction at the angle of view of the first array detector and the X direction at the angle of view of the second array detector are a same direction for the light spot of the beam, and both the Y direction at the angle of view of the first array detector and the X direction at the angle of view of the second array detector are row directions of the array detectors. It should be understood that the row direction, the column direction, the X direction, the Y direction, the Z direction, and the like are merely examples for ease of understanding of this application. In a specific implementation, rows and columns may be replaced with each other, and the X direction, the Y direction, the Z direction, and the like may have other designs.

In the foregoing accompanying drawings, an example in which the pixel size of the first array detector is the same as the pixel size of the second array detector is used for description. In some possible implementations, the pixel size the first array detector is different from the pixel size of the second array detector. Specifically, the first array detector includes a plurality of first pixels, the second array detector includes a plurality of second pixels, and a size of the first pixel is different from a size of the second pixel.

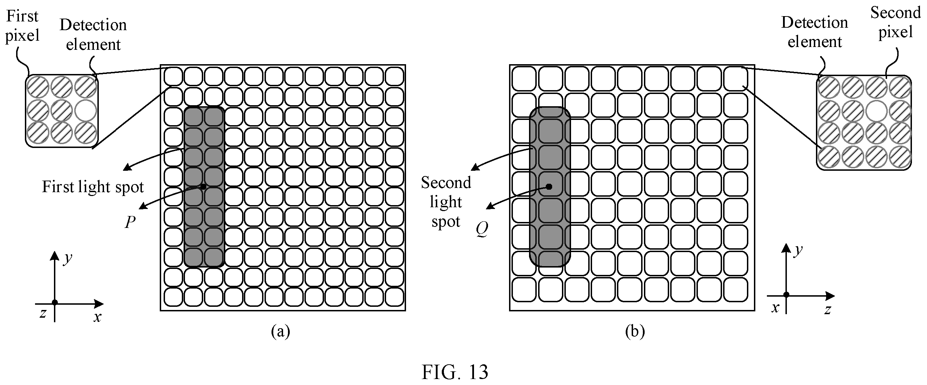

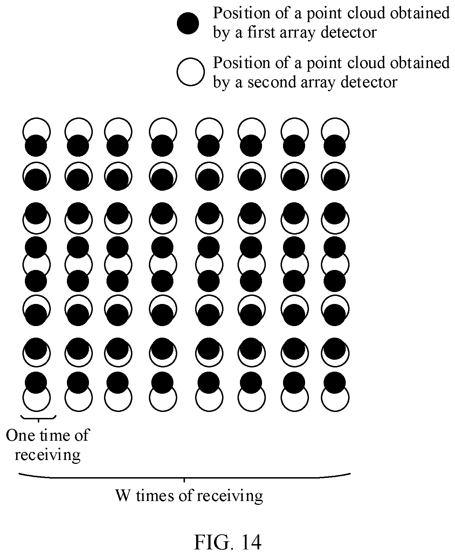

Optionally, a quantity of detection cells included in the first pixel may be different from a quantity of detection cells included in the second pixel. Further, sizes of light passing surfaces of the detection cells are the same or different. Alternatively, optionally, the first pixel and the second pixel include a same quantity of detection cells, but sizes of light passing surfaces of the detection cells included in the first pixel and the second pixel are different. For example, refer to (a) in FIG. 13. The first pixel of the first array detector 16 includes nine 3*3 detection cells, but the second array detector 17 includes 16 4*4 detection cells. Because the pixels are different, the region in which the first array detector 16 receives the energy of the first light spot is also different from the region in which the second array detector 17 receives the energy of the second light spot. As shown in (b) in FIG. 13, the midpoint P of the first light spot in the first direction (for example, the y direction) falls into a gap between the pixels of the first array detector 16, and the midpoint P of the second light spot in the first direction falls into the pixel of the second array detector 17. With reference to FIG. 14, an example in which an equivalent receiving point reflects a region in which the energy is received is used. Due to a design of different pixel sizes, light falling into a pixel gap of one detector may be received by the other detector, so that the positions of the point clouds of the first array detector 16 and the second array detector 17 are interwoven, and a gap between the positions of the point clouds is reduced. This effectively improves the point cloud density.

The implementations of this application may be combined. In a possible implementation, when pixel sizes of the first array detector 16 and the second array detector 17 are different, relative positions in which the first array detector 16 and the second array detector 17 receive the light spots may be further offset. For example, there is a first offset in the first direction, and/or there is a second offset in the second direction. Further, the first offset may be a width of (N+0.5) first pixels in the first direction, or a width of (N+0.5) second pixels in the first direction. Similarly, the second offset may be a width of (N+0.5) first pixels in the second direction, or a width of (N+0.5) second pixels in the second direction.

In a possible implementation, the first array detector 16 and the second array detector 17 have a same viewpoint, and the viewpoint herein is a viewpoint relative to the detection region. In other words, the first array detector 16 and the second array detector 17 have a same imaging ratio for the detection region, so that the first array detector 16 and the second array detector 17 can see a same field of view region, and physical proportions of the detection region seen by the first array detector 16 and the second array detector 17 are the same. Therefore, the detection data obtained by the first array detector 16 and the second array detector 17 is aligned at a pixel level, and is easy to be fused, so that the accuracy of the detection result can be effectively improved. Certainly, that "the first array detector and the second array detector can see the same field of view region" described herein includes two cases in which fields of view seen by the first array detector and the second array detector completely overlap, or field of view regions of the first array detector and the second array detector partially overlap.

In a possible implementation, with reference to FIG. 2, no optical element that can change focal power is disposed on the optical path between the beam splitting apparatus 13 and the first array detector 16 and on the optical path between the beam splitting apparatus 13 and the second array detector 17. In this way, imaging features corresponding to the first beam and the second beam are consistent on optical paths from the beam splitting apparatus 13 to the first array detector 16 and the second array detector 17 respectively, and the viewpoints of the first array detector 16 and the second array detector 17 are the same.

Alternatively, in another possible implementation, two optical elements with a same optical property are respectively disposed on the optical path between the beam splitting apparatus 13 and the first array detector 16 and the optical path between the beam splitting apparatus 13 and the second array detector 17, so that the viewpoints of the first array detector and the second array detector 17 are the same.

In a possible implementation, with reference to FIG. 2, the photosensitive surface of the first array detector 16 is perpendicular to the photosensitive surface of the second array detector 17. With reference to FIG. 2, a photosensitive surface of the first array detector 16 is parallel to an XY plane, and a photosensitive surface of the second array detector 17 is parallel to a YZ plane. The photosensitive planes of the first array detector 16 and the second array detector 17 are designed to be perpendicular to each other, so that there is no need to dispose an optical element behind the beam splitting apparatus 13 to bend the beam, the first array detector 16, the second array detector 17, and the beam splitting apparatus 13 are disposed in a more centralized manner, design difficulty of the optical path is reduced, and a dual-array detector solution is easier to implement.

In a possible implementation, with reference to FIG. 2, the beam splitting apparatus 13 is an amplitude beam splitting apparatus, or the beam splitting apparatus 13 is a wavelength beam splitting apparatus. Optionally, the beam splitting apparatus 13 may be a beam splitting prism or a beam splitting plate. In addition, in some solutions, the beam splitting apparatus 13 may alternatively be a metalens, and a beam splitting function can be implemented by designing a shape and arrangement of nanounits in the metalens.

For example, the beam splitting apparatus 13 is a semi-transmissive semi-reflective beam splitter. The received beam is split by the beam splitting apparatus 13 into the first beam and the second beam. The first beam and the second beam each carry half of energy of the received beam, and a signal-to-noise ratio of the first beam and a signal-to-noise ratio of the second beam are the same as or similar to a signal-to-noise ratio of the received beam, so that a difference between a long-range detection capability of the first array detector 16 and a long-range detection capability of the second array detector 17 is small. This improves the detection accuracy and the fusion effect. The signal-to-noise ratio herein is a ratio of an echo (or referred to as signal light) of the transmitted beam to background light. An energy ratio, a spectral width, and the like of the first beam and the second beam that are obtained through splitting by the beam splitting apparatus 13 may be adjusted.

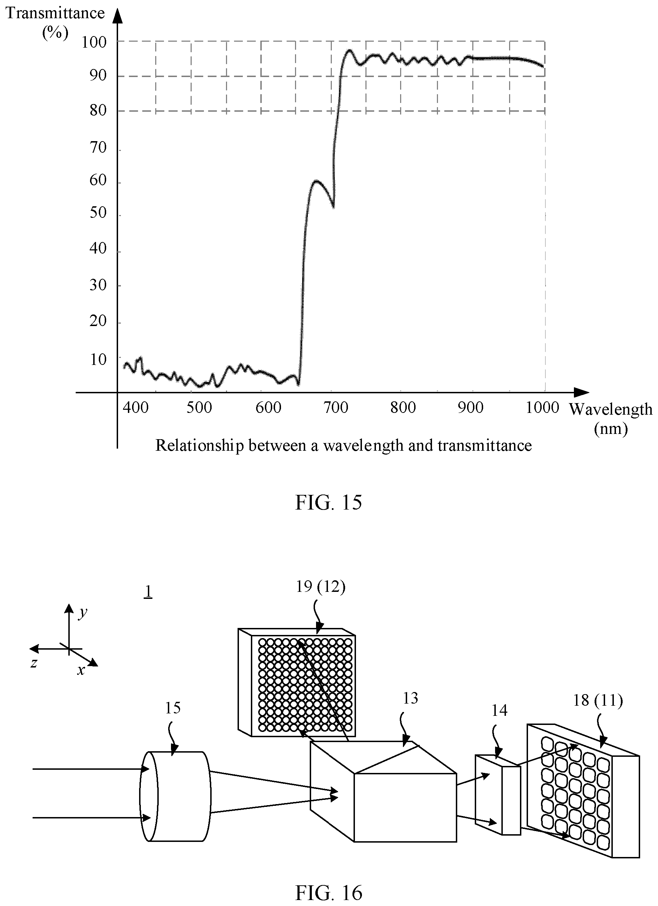

For another example, the beam splitting apparatus may be a dichroic beam splitter. The dichroic beam splitter has high transmittance for light within a first wavelength range and high reflectivity for light within a second wavelength range. The first wavelength range is different from the second wavelength range. Optionally, "different" may include "completely different" and "partially overlapping". In this case, the first array detector 16 includes a detection cell that responds to the light within the first wavelength range, and the second array detector 17 includes a detection cell that responds to the light within the second wavelength range. For example, the transmitting module 2 may transmit light with a wavelength of 600 nm and light with a wavelength of 950 nm. The second array detector 17 responds to the light with the wavelength of 600 nm, and the first array detector 16 responds to the light with the wavelength of 950 nm. With reference to FIG. 15, the dichroic mirror has high reflectivity for the light with the wavelength of 600 nm and high transmittance for the light with the wavelength of 950 nm. In this way, the two array detectors respectively receive more beams in line with wavelength ranges to which the two array detectors respond, to improve energy of optical signals received by the array detectors, improve the detection efficiency, and improve the detection accuracy. In some solutions, the transmitting module may include two types of light sources, for example, referred to as a first light source and a second light source. The first light source may be configured to transmit light whose wavelength belongs to the first wavelength range, and the second light source may transmit light whose wavelength belongs to the second wavelength range.

For another example, the dichroic beam splitter has a specific proportion of transmittance and reflectivity on a beam within a specific wavelength range. In this case, the dichroic beam splitter may transmit and reflect the beam within the wavelength range in the specific proportion. With reference to FIG. 15, the transmitting module 2 may transmit a transmitted beam of 700 nm, both the two array receivers may respond to the light of about 700 nm, and the dichroic beam splitter has transmittance of about 50% for the beam of about 700 nm (for example, 700 nm±20 nm). In this way, both the two array receivers can receive an echo of the transmitted beam.

In a possible implementation, the receiving module further includes the imaging lens. With reference to FIG. 2, the received beam (including the beam from the detection region) is propagated to the beam splitting apparatus 13 through the imaging lens 15.

In a possible implementation, the receiving module further includes the filter module. With reference to FIG. 2, the filter module 14 is disposed on the optical path between the imaging lens 15 and the beam splitting apparatus 13, and the received beam (including the beam from the detection region) is propagated to the beam splitting apparatus 13 through the filter module 14.

Optionally, the filter module may include a plurality of filters, and the plurality of filters may be separately disposed on the optical path between the beam splitting apparatus 13 and the array detectors. With reference to the example in FIG. 15, when the first array detector 16 includes the detection cell that responds to the light within the first wavelength range, and the second array detector 17 includes the detection cell that responds to the light within the second wavelength range, the filter module includes a first lens and a second lens. The first lens is disposed between the beam splitting apparatus 13 and the first array detector 16, so that the light within the first wavelength range is transmitted, but light with another wavelength is blocked. The second lens is disposed between the beam splitting apparatus 13 and the second array detector 17, so that the light within the second wavelength range is transmitted, but light with another wavelength is blocked.

It should be noted that FIG. 2 to FIG. 15 are described by using a case of two array detectors as an example. In some solutions, the beam may be split into more sub-signals. Correspondingly, more receivers may be disposed in the detection apparatus to respectively receive more sub-signals obtained through splitting. For example, the beam splitting apparatus may split the received beam into three sub-signals, energy proportions of the sub-signals may be the same or different, and three array detectors are correspondingly disposed to respectively receive the sub-signals.

The foregoing describes a receiving module including two detectors. The following describes a receiving module including a detector and an image sensor.

In another possible design, the receiving module includes the detector and the image sensor. Refer to FIG. 16. A receiving module 1 includes a beam splitting apparatus 13, an array detector 18 (which may be considered as a first optical receiver 11), and an image sensor 19 (which may be considered as a second optical receiver 12). The beam splitting apparatus 13 is configured to split a received beam into a first beam and a second beam, the array detector 18 is configured to receive the first beam, and the image sensor is configured to perform imaging by using the second beam. Further, the array detector can obtain, based on obtained beam energy, information about a detection region, including one of more pieces of information of TOF information, and a distance, a position, an angle, reflectivity, a color, or the like of a target in the detection region. The image sensor can obtain an image of the detection region based on obtained beam energy. Certainly, the image may also be considered as detection data. For example, the array detector 18 includes but is not limited to an SPAD array detector, an APD array, or the like. For related descriptions, refer to the foregoing descriptions of the detector. The image sensor 19 is a CIS, for example, includes one or more of a color sensor, a mono sensor (mono sensor), or the like. The color sensor is, for example, a red green blue sensor (red green blue sensor, RGB sensor). The mono sensor may implement imaging in a low illumination environment or even a dark environment based on the transmitted beam, thereby greatly improving detection effect of the detection apparatus in a low illumination condition, and improving detection accuracy.

In some solutions, in the image obtained by the image sensor, it is easier to identify a contour and a color of the target, and the detection data obtained by the array detector may be used to determine the position, the distance, the angle, and/or the like of the target in the detection region. When the image and the detection data are fused, accuracy of target identification can be improved. In this embodiment of this application, the beams received by the array detector and the image sensor are obtained by splitting a same beam, so that fields of view of the array detector and the image sensor overlap, and the detection data obtained by the array detector can be aligned with the image obtained by the image sensor, thereby reducing complexity of registration and calibration in a fusion process.

In this embodiment of this application, a photosensitive surface of the array detector 18 is perpendicular to a photosensitive surface of the image sensor. With reference to FIG. 16, the photosensitive surface of the array detector 18 is parallel to an XY plane, and a photosensitive surface of the image sensor 19 is parallel to a YZ plane. The photosensitive planes of the array detector 18 and the image sensor 19 are designed to be perpendicular to each other, so that there is no need to dispose an optical element behind the beam splitting apparatus 13 to bend the beam, the array detector 18, the image sensor, and the beam splitting apparatus can be disposed in a more centralized manner, design difficulty of the optical path is reduced, and a solution of combining the array detector and the image sensor is easier to implement.

In a possible implementation, the array detector and the image detector have a same viewpoint for the detection region. In other words, the array detector and the image sensor have a same imaging ratio for the detection region, so that the first array detector and the second array detector can see a same field of view region, and physical proportions of the detection region seen by the first array detector and the second array detector are the same. Therefore, the detection data obtained by the first array detector and the second array detector is aligned at a pixel level, and is easy to be fused, so that accuracy of a detection result can be effectively improved.

In a possible implementation, the beam splitting apparatus 13 is an amplitude beam splitting apparatus, or the beam splitting apparatus 13 is a wavelength beam splitting apparatus. Optionally, the beam splitting apparatus 13 may be a beam splitting prism or a beam splitting plate. In addition, in some solutions, the beam splitting apparatus 13 may alternatively be a metalens, and a beam splitting function can be implemented by designing a shape and arrangement of nanounits in the metalens.

For example, the beam splitting apparatus may be a dichroic beam splitter. The dichroic beam splitter has high transmittance for light within a third wavelength range and high reflectivity for light within a fourth wavelength range. The third wavelength range is different from the fourth wavelength range. Optionally, "different" may include "completely different" and "partially overlapping". In this case, the array detector 18 includes a detection cell that responds to the light within the third wavelength range, and the image sensor 19 includes a detection cell that responds to the light within the second wavelength range. For example, the array detector may respond to light with a wavelength of 1550 nm, the image detector may respond to visible light (a wavelength range is about 780 nm to 400 nm), and the dichroic mirror has high transmittance for light with a wavelength of 905 nm and high reflectivity for the visible light.

In a possible implementation, the receiving module further includes an imaging lens. With reference to FIG. 16, the beam from the detection region is propagated to the beam splitting apparatus 13 through the imaging lens 15.

Further, sizes of the photosensitive surfaces of the image sensor and the array detector, or sizes of the image sensor and the array detector may be selected based on a fusion requirement of the image and a point cloud. For example, the size of the photosensitive surface of the image sensor is greater than the size of the photosensitive surface of the array detector, and a region in which the field of view of the image sensor and the field of view of the array detector overlap is an ROI region.

In a possible implementation, the receiving module further includes a filter module. With reference to FIG. 16, the filter module 14 is disposed between the beam splitting apparatus 13 and the array detector 18.

In a possible implementation, there is an offset between a relative position of a light spot of the first beam on the array detector and a relative position of a light spot of the second beam on the image sensor. For example, there is a first offset in a first direction and/or a second offset in a second direction. For related descriptions, refer to the descriptions of embodiments in FIG. 2 to FIG. 14 and the possible implementations of embodiments. Details are not described herein again.

An embodiment of this application further provides a lidar. The lidar includes the detection apparatus 100.

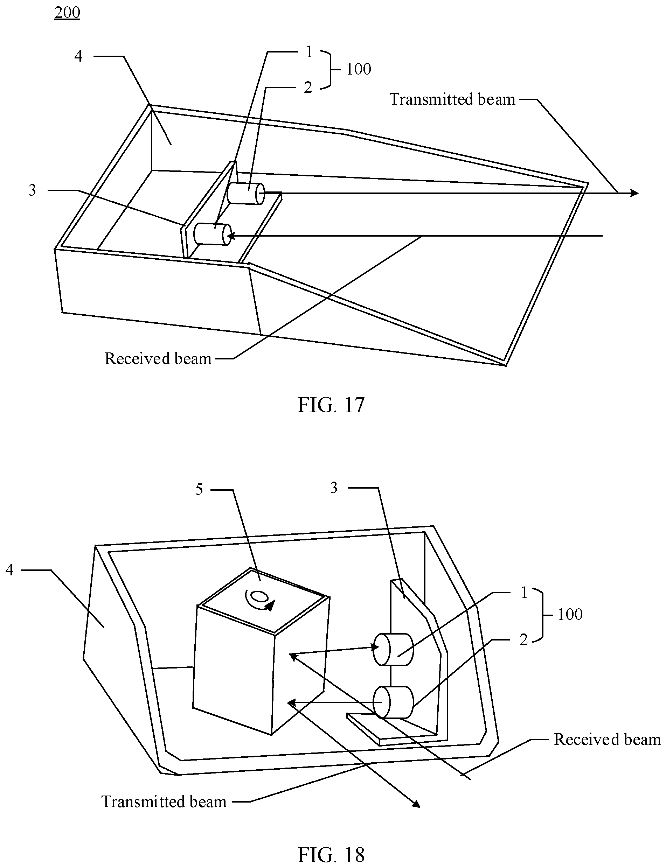

FIG. 17 is a diagram of a structure of a lidar according to an embodiment of this application. The lidar 200 includes a transmitting module 2 and a receiving module 1. For example, in the lidar shown in FIG. 17, the transmitting module 2 and the receiving module 1 are disposed off-axis, and a transmitted beam transmitted by the transmitting module 2 does not pass through an optical element in the receiving module 1.

In a possible implementation, the transmitting module 2 and the receiving module 1 are arranged (or arranged) in a direction parallel to the ground, as shown in FIG. 17. Alternatively, optionally, the transmitting module 1 and the receiving module 2 are arranged in a direction perpendicular to the ground.

In another possible implementation, the lidar further includes a bottom housing, the bottom housing includes a bottom inner surface, and an inner surface herein is a surface inside the bottom housing. Optionally, a side wall, a side outer surface, a bottom outer surface, and the like are further included. The transmitting module and the receiving module are arranged in a direction parallel to the bottom inner surface of the bottom housing, or the transmitting module and the receiving module are arranged in a direction parallel to the bottom inner surface of the bottom housing.

For example, refer to FIG. 17. The detection apparatus further includes a housing 4. The housing 4 includes the bottom housing, and the transmitting module 2 and the receiving module 1 are arranged in a direction parallel to the bottom housing of the housing 4, that is, arranged in a direction parallel to the bottom inner surface of the bottom housing of the housing 4. Further, the bottom housing is parallel to the ground (or the bottom inner surface of the bottom housing is parallel to the ground). In this case, the transmitting module 2 and the receiving module 1 are arranged in the direction parallel to the ground.

In some possible implementations, the lidar 200 further includes a structural member 3, and the structural member 3 is configured to fasten the transmitting module and/or the receiving module to the housing 4. Further, the connection may be a heat-conducting connection.

Optionally, the lidar shown in FIG. 17 is a flash lidar. In other words, the transmitting module and the detection apparatus provided in this application can be used in the flash lidar.

FIG. 18 is a diagram of a structure of another lidar according to an embodiment of this application. The lidar 200 includes a transmitting module 2 and a receiving module 1. For example, in the lidar shown in FIG. 18, the transmitting module 2 and the receiving module 1 are disposed off-axis, and a beam transmitted by the transmitting module 2 does not pass through an optical element in the receiving module 1.

In a possible implementation, the transmitting module 2 and the receiving module 1 are arranged (or arranged) in a direction perpendicular to the ground, as shown in FIG. 17. Alternatively, optionally, the transmitting module 1 and the receiving module 2 are arranged in a direction perpendicular to the ground.

In another possible implementation, the lidar further includes a bottom housing, the bottom housing includes a bottom inner surface, and an inner surface herein is a surface inside the bottom housing. Optionally, a side wall, a side outer surface, a bottom outer surface, and the like are further included. The transmitting module and the receiving module are arranged in a direction perpendicular to the bottom inner surface of the bottom housing, or the transmitting module and the receiving module are arranged in a direction perpendicular to the bottom inner surface of the bottom housing.

For example, refer to FIG. 18. The detection apparatus further includes a housing 4. The housing 4 includes the bottom housing, and the transmitting module 2 and the receiving module 1 are arranged in a direction perpendicular to the bottom housing of the housing 4, that is, arranged in the direction perpendicular to the bottom inner surface of the bottom housing of the housing 4. Further, the bottom housing is parallel to the ground (or the bottom inner surface of the bottom housing is parallel to the ground). In this case, the transmitting module 2 and the receiving module 1 are arranged in the direction perpendicular to the ground.

In some possible implementations, the lidar 200 further includes a structural member 3, and the structural member 3 is configured to fasten the transmitting module and/or the receiving module to the housing 4. Further, the connection may be a heat-conducting connection.

Optionally, the lidar 200 further includes a scanning module 5. The scanning module 5 is configured to: scan the transmitted beam to a detection region, and provide a beam from the detection region for the receiving module 1. Further, the scanning module 5 includes one or more of an oscillating mirror, a rotating mirror (polygon), a micro-electro-mechanical system (micro-electro-mechanical system, MEMS) mirror, a metal oscillating mirror, or the like. In some solutions, the scanning module may include one or more reflective surfaces, and the reflective surface may be installed on a body of the scanning module in a form of a patch, or the reflective surface of the scanning module and the body of the scanning module may be integrated. Optionally, a scanning manner of the scanning module 5 may be one-dimensional scanning, two-dimensional scanning, or the like.

Optionally, the lidar shown in FIG. 18 is a scanning lidar. In other words, the transmitting module and the detection apparatus provided in this application can be used in the scanning lidar.

In some possible implementations, the transmitting module and the receiving module of the lidar are designed off-axis. A transmitting optical path and a receiving optical path of the lidar with an off-axis design are easily isolated, so that interference of spurious light to receiving of the receiving module can be reduced, and detection accuracy of the lidar can be improved.

FIG. 17 and FIG. 18 are described by using the lidar with the off-axis design as an example. In some solutions, the receiving module provided in this application may also be used in a coaxial lidar.

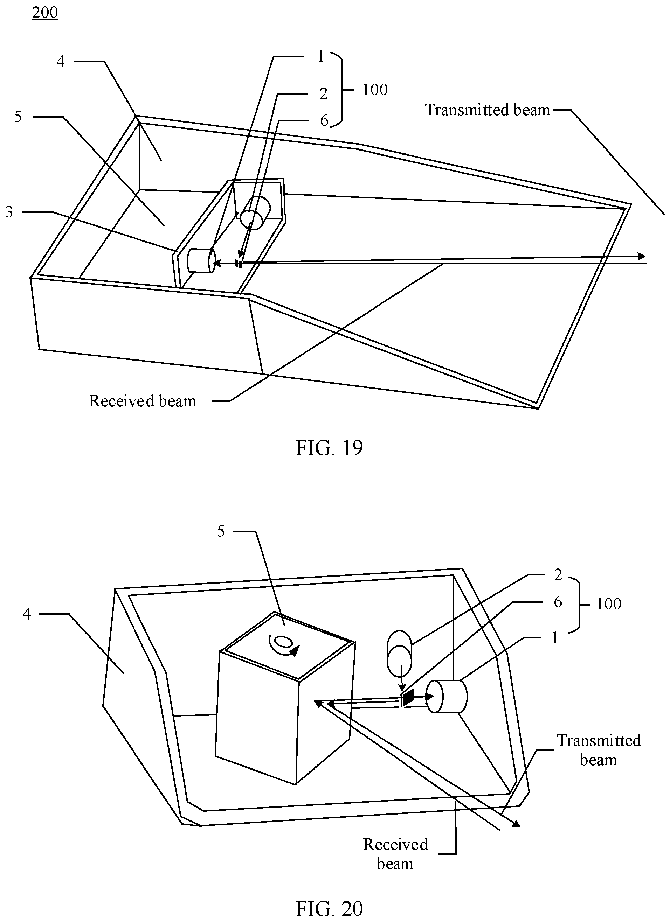

FIG. 19 is a diagram of a structure of a lidar according to an embodiment of this application. A transmitting module 2 and a receiving module 1 in a detection apparatus 100 are designed coaxially. For another related component and a possible design, refer to the foregoing descriptions.

In a possible implementation, refer to FIG. 19. The detection apparatus 100 further includes a coaxial module 6. The coaxial module is configured to cause a transmitting optical path of the transmitting module 2 to be coaxial with a receiving optical path of the receiving module 1. For example, the coaxial module 6 includes a reflector, or the coaxial module includes a polarization beam splitter, a wave plate, a semi-transmissive semi-reflective beam splitter, or a beam splitter with another split ratio.

FIG. 20 is a diagram of a structure of another lidar according to an embodiment of this application. A transmitting module 2 and a receiving module 1 in a detection apparatus 100 are designed coaxially. For another related component and a possible design, refer to the foregoing descriptions.

In a possible implementation, the detection apparatus 100 further includes a coaxial module 6. The coaxial module is configured to cause a transmitting optical path of the transmitting module 2 to be coaxial with a receiving optical path of the receiving module 1. For example, the coaxial module 6 includes a reflector, or the coaxial module includes a polarization beam splitter, a wave plate, a semi-transmissive semi-reflective beam splitter, or a beam splitter with another split ratio.

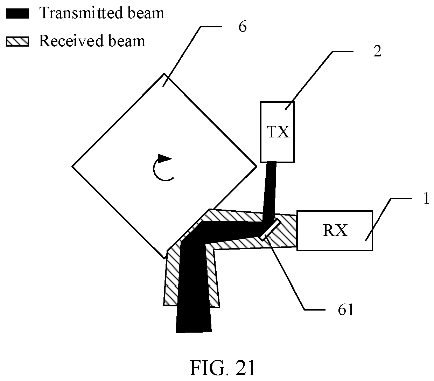

For example, the coaxial module includes a reflector. FIG. 21 is a diagram of an optical path of the lidar shown in FIG. 20. The detection apparatus includes the reflector 61, which may be considered as the coaxial module 6 in FIG. 20. The reflector 61 is configured to reflect a transmitted beam from the transmitting module 2. The transmitted beam passing through the reflector 61 is coaxial with a received beam propagating to the receiving module, that is, principal axes of the transmitted beam and the received beam are the same.

An embodiment of this application further provides a terminal. The terminal includes the detection apparatus, the receiving module, or the lidar.

Optionally, the terminal may be an intelligent terminal or a transportation means like a vehicle, an uncrewed aerial vehicle, or a robot, or the terminal may be an industrial device. It should be understood that the terminal in this application may include an intelligent terminal or a transportation means like a vehicle, a robot, an uncrewed aerial vehicle, a ship, or a boat. The vehicle is a vehicle in a broad sense, and may be a transportation means (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), or the like. For another example, the robot may be a robot like an automated guided vehicle (automated guided vehicle, AGV), a walkable conversation robot, or a service robot. The industrial device is, for example, an industrial robot or a robotic arm. The entertainment device is, for example, a virtual reality (virtual reality, VR) device, a mixed reality (mixed reality, MR) device, or a 4D cinema cockpit.

Optionally, the detection apparatus may be installed in a plurality of possible positions. For example, the detection apparatus is installed on a platform of a dashboard of a vehicle, or installed on a top of a cockpit (as shown in FIG. 9), or may be installed on a head of the vehicle, a side surface of the vehicle, a tail of the vehicle, or the like.

In the descriptions of this application, orientation or position relationships indicated by terms "center", "upper", "lower", "vertical", "horizontal", "inside", "outside", "side", and the like are orientation or position relationships based on the accompanying drawings, and are merely intended for ease of describing this application and simplifying the description, but does not indicate or imply that an indicated apparatus or element needs to have a specific orientation or needs to be construed and operated in a specific orientation. Therefore, such terms should not be understood as a limitation on this application. It should be understood that the Z direction, the Y direction, the X direction, and the like mentioned in some embodiments of this application are referred to by using an XYZ rectangular coordinate system, to facilitate description of features in this solution, but does not indicate or imply that an indicated apparatus or element needs to have a specific orientation or needs to be construed and operated in a specific orientation.

In embodiments of this application, a term "example", "for example", or the like is used to give an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. A term "and/or" describes an association relationship between associated objects, and indicates that three relationships may exist. For example, A and/or B may indicate the following three cases: Only A exists, both A and B exist, and only B exists, where A and B may be singular or plural. A character "/" usually indicates an "or" relationship between the associated objects.

In addition, unless otherwise specified, ordinal numbers such as "first" and "second" are used in embodiments of this application to distinguish between a plurality of objects, and are not intended to limit a sequence, a time sequence, priorities, or importance of the plurality of objects. For another example, a first wavelength range, a second wavelength range, a third wavelength range, a fourth wavelength range, and the like are merely intended to describe a wavelength range in an implementation, and do not indicate a difference in importance of the wavelength ranges, a sequence of the wavelength ranges in a spectrum, or the like. In some cases, the first wavelength range and the third wavelength range may be a same wavelength range.

## Claims

1. A receiving module, comprising a first array detector, a second array detector, and a beam splitting apparatus, wherein the beam splitting apparatus is configured to split a beam from a detection region into a first beam and a second beam;
the first beam forms a first light spot on the first array detector;
the second beam forms a second light spot on the second array detector; and
a relative position of the first light spot on the first array detector is different from a relative position of the second light spot on the second array detector.

2. The receiving module according to claim 1, wherein a size of a photosensitive surface of the first array detector is the same as a size of a photosensitive surface of the second array detector; and
in a first direction, there is a first offset between the relative position of the first light spot on the first array detector and the relative position of the second light spot on the second array detector.

3. The receiving module according to claim 1 or 2, wherein in the first direction, there is the first offset between a relative position of the first array detector and a center of the beam splitting apparatus and a relative position of the second array detector and the center of the beam splitting apparatus.

4. The receiving module according to claim 2 or 3, wherein the first array detector and the second array detector each comprise M pixels, the M pixels are arranged in K rows, M is an integer and M≥2, and K is a positive number and M≥K≥2; and
the first offset is a length of (N+0.5) pixels, N is an integer less than K, and N≥0.

5. The receiving module according to claim 4, wherein the first offset is a length of 0.5 pixels, and the relative position of the first light spot on the first array detector overlaps the relative position of the second light spot on the second array detector.

6. The receiving module according to any one of claims 1 to 5, wherein there is an overlapping region between the relative position of the first light spot on the first array detector and the relative position of the second light spot on the second array detector, and the overlapping region is a region of interest ROI.

7. The receiving module according to claim 4 or 5, wherein one pixel comprises detection cells in A rows and B columns, A is an integer and A≥1, and B is a positive number and B≥1.

8. The receiving module according to any one of claims 2 to 7, wherein the first direction is a column direction of the first array detector and the second array detector.

9. The receiving module according to claim 1 or 2, wherein the first array detector comprises a plurality of first pixels, the second array detector comprises a plurality of second pixels, and a size of the first pixel is different from a size of the second pixel.

10. The receiving module according to any one of claims 1 to 9, wherein the first array detector and the second array detector have a same viewpoint relative to the detection region.

11. The receiving module according to any one of claims 1 to 10, wherein the beam splitting apparatus is an amplitude beam splitting apparatus, or the beam splitting apparatus is a wavelength beam splitting apparatus.

12. The receiving module according to any one of claims 1 to 11, wherein the first array detector and the second array detector are single-photon avalanche diode SPAD array detectors.

13. The receiving module according to any one of claims 1 to 12, wherein the receiving module further comprises an imaging lens, and the beam from the detection region is propagated to the beam splitting apparatus through the imaging lens.

14. The receiving module according to any one of claims 1 to 13, wherein the receiving module further comprises a filter module, and the beam from the detection region is propagated to the beam splitting apparatus through the filter module.

15. A receiving module, wherein the receiving module comprises a beam splitting apparatus, an array detector, and an image sensor, wherein
the beam splitting apparatus is configured to split a beam from a detection region into a first beam and a second beam;
the array detector is configured to receive the first beam;
the image sensor is configured to perform imaging by using the second beam; and
the array detector and the image sensor have a same viewpoint for the detection region, and a photosensitive surface of the array detector is perpendicular to a photosensitive surface of the image sensor.

16. The receiving module according to claim 15, wherein the array detector is a single-photon avalanche diode SPAD array detector, and the image sensor is a complementary metal oxide semiconductor CMOS image sensor.

17. The receiving module according to claim 15 or 16, wherein the beam splitting apparatus is a wavelength beam splitting apparatus, or the beam splitting apparatus is an amplitude beam splitting apparatus.

18. The receiving module according to any one of claims 15 to 17, wherein the receiving module further comprises an imaging lens, and the beam from the detection region is propagated to the beam splitting apparatus through the imaging lens.

19. The receiving module according to any one of claims 15 to 18, wherein the receiving module further comprises a filter module, and the filter module is disposed between the beam splitting apparatus and the array detector.

20. A detection apparatus, wherein the detection apparatus comprises a transmitting module and the receiving module according to any one of claims 1 to 19, wherein
the transmitting module is configured to transmit a beam to a detection region; and
the receiving module is configured to receive the beam from the detection region, wherein the beam from the detection region comprises an echo of the transmitted beam.

21. The detection apparatus according to claim 20, wherein the transmitting module and the receiving module are disposed off-axis.

22. The detection apparatus according to claim 20, wherein the transmitting module and the receiving module are disposed coaxially.

23. The detection apparatus according to claim 22, wherein the detection apparatus comprises a reflector, and the reflector is configured to reflect the transmitted beam from the transmitting module; and
the transmitted beam passing through the reflector is coaxial with a received beam propagating to the receiving module.

24. The detection apparatus according to any one of claims 20 to 23, wherein the detection apparatus further comprises a scanning module, and the transmitted beam is propagated to the detection region after passing through the scanning module; and
the beam from the detection region is propagated to the receiving module after passing through the scanning module.

25. The detection apparatus according to any one of claims 20 to 24, wherein the detection apparatus further comprises a bottom housing, and the bottom housing comprises a bottom inner surface;
the transmitting module and the receiving module are arranged in a direction parallel to the bottom inner surface of the bottom housing; or
the transmitting module and the receiving module are arranged in a direction perpendicular to the bottom inner surface of the bottom housing.

26. The detection apparatus according to any one of claims 20 to 24, wherein the transmitting module and the receiving module are arranged in a direction parallel to the ground; or
the transmitting module and the receiving module are arranged in a direction perpendicular to the ground.

27. A lidar, wherein the lidar comprises the detection apparatus according to claim 20.

28. A terminal, wherein the terminal comprises the detection apparatus according to claim 20, or comprises the lidar according to claim 21.
